# EUROPEAN PATENT SPECIFICATION

(11) **EP 0 829 194 B1**
(45) Date of publication and mention of the grant of the patent: **28.11.2001**
(21) Application number: 97202688.4
(22) Date of filing: 02.09.1997
(51) Int. Cl.: A01C 15/00, A01C 17/00

(54) **An implement for spreading granular and/or pulverulent material**
Streuer für körniges und/oder pulveriges Gut
Epandeur pour des matériaux granulaires et/ou poudreuses

(30) Priority: 10.09.1996 NL 1003991; 26.09.1996 NL 1004118
(43) Date of publication of application: 18.03.1998
(73) Proprietor: MAASLAND N.V., 3155 PD Maasland (NL)
(72) Inventor: Van der Lely, Olaf, 6300 Zug (CH)
(74) Representative: Corten, Maurice Jean F.M.

(56) References cited:
- EP-A- 0 445 842
- EP-A- 0 481 845
- DE-U- 8 632 954
- FR-A- 2 588 836

## Description

The present invention relates to an implement for spreading granular and/or pulverulent material, in particular for spreading fertilizer, which implement comprises a hopper provided with at least one discharge opening, and at least one spreading member, the discharge opening being adapted to be closed completely or partially to a greater or lesser extent by means of a dosing member, and additional means being provided to influence the conveyance of the material to be discharged through the discharge opening. Said means are usually constituted by a stirring member in the hopper, but can also be constituted by otherwise movable elements; they are also designated as agitators. It is known to drive these means with the aid of the same means as those by which the spreading member is driven. This has the disadvantage that at usually high speeds of rotation of the spreading member, the said means smash and even pulverize the material to be spread, at least when the latter is granular. This problem is known from Dutch patent application 84 02 525, in which, therefore, it is suggested to provide an adjustable transmission between the shaft of agitator means present in the hopper and that of the spreading member, so that the rotation shaft of the agitator means can be modified and in particular be lowered in respect of that of the spreading member. In German Offenlegungsschrift 28 04 253 a separate drive of agitator means and spreading member is suggested as a solution to the above-mentioned problem. However, in neither of the two known solutions there is obtained a quick adaptation of the speed of movement of the agitator means to the amount of material spread per unit of time, while in particular on the headland or, when the implement is designed as a double disc spreader, during the so-called "edge spreading", in which situations one discharge opening is closed completely, an immediate stop of the agitator means is not achieved.

In order to solve this problem at least to a considerable extent, in accordance with the invention, the implement described in the preamble is characterized in that the said means are capable of being controlled electronically. This electronic controllability can be realized both from the. cabin of a preceding vehicle and, automatically, from means observing the outflow of material from the hopper said means being provided in the implement itself. In particular, the agitator means are capable of being controlled automatically, depending on the discharge opening being closed or not and/or the size of the discharge opening and/or the kind of fertilizer. Furthermore there can be provided a sensor member to establish whether or not material is flowing through the discharge opening; this sensor member can be constituted e.g. by a sensor disposed at the lower side of the hopper, near the discharge opening thereof, or by the dosing member itself. In the latter case, after having closed the discharge opening, said dosing member will also ensure that the said means are put out of operation.

The invention further relates to an implement for spreading granular and/or pulverulent material, in particular for spreading fertilizer, which implement comprises a hopper provided with at least one discharge opening, and at least one spreading member, the discharge opening being adapted to be closed completely or partially to a greater or lesser extent by means of a dosing member, and additional means being provided to influence the conveyance of the material to be spread through the discharge opening adjusted by the dosing member. These means are capable of being controlled automatically, depending on the amount of material flowing through the discharge opening per unit of time. In particular there is provided a sensor member for determining the amount of material flowing through the discharge opening per unit of time. This sensor member can be constituted by a weighing trestle by means of which the implement can be coupled to a preceding vehicle. Such a weighing trestle is described in EP-A-O 537 857.

When using a double disc spreader, during the so-called "edge spreading" one of the discharge spouts of the hopper will be closed; such a method is known from EP-A-O 551 949. In order to apply the inventive idea of the present application in such an implement, the latter is characterized in that the hopper is provided with at least two discharge spouts, each spout including at least one discharge opening and in each spout means being provided for influencing the conveyance of the material to be spread through a respective discharge opening, which means are capable of being controlled electronically, independently of each other, in the various discharge spouts.

In the implement described thus far the said means can be driven with the aid of an electronically controlled motor; the latter can be provided both inside and outside the hopper. In the latter case, transmission means have to be passed through the lateral side of the hopper or via the open upper side thereof to the means located in the lower part of the hopper. Instead of a motor, an electromechanical control cylinder or actuator, possibly in combination with an excenter mechanism, can be used to cause the means in the lower part of the hopper to move. This movement can be a reciprocating movement, a swinging or a rotating movement. In this situation the stroke of the reciprocating movement or that of the swinging movement can be electronically adjustable. The speed of movement or the shape of the said means can be electronically adjustable as well. Furthermore, the means can be constituted by a bottom or bottom portion which is movable, in particular rotatable, or can comprise a bottom portion which is movable, in particular rotatable. In a specific embodiment, the discharge opening or discharge openings can be provided in the lower wall of the hopper in the lateral side thereof and the said means can be constituted by the bottom of this hopper. In this situation, when the means are in the position of rest, they are capable of closing the discharge openings. In a concrete embodiment, the hopper can be provided with one or more conical discharge spouts and the discharge openings can be provided in the lower part of the discharge spouts in the lateral side thereof; the said means can then be constituted by a rotatable bottom for the relevant discharge spouts, which rotatable bottom has an upright or a folded edge closing the discharge openings in the position of rest of the means. The means can also comprise e.g. a disc capable of closing the discharge openings in the bottom of the hopper, and can furthermore be provided with moving elements which are capable of being activated when the means have been adjusted into a position in which the disc releases the discharge openings.

For a better understanding of the invention, reference will now be made to the accompanying drawings, in which:
Figure 1 shows an implement designed as a double disc spreader including an agitator control according to the invention;
Figure 2 shows such an implement having an alternative agitator control;
Figures 3 and 4 show again another embodiment of an agitator control;
Figures 5 and 6 show a further alternative of an agitator control, and
Figure 7 shows an embodiment including a rotatable bottom.

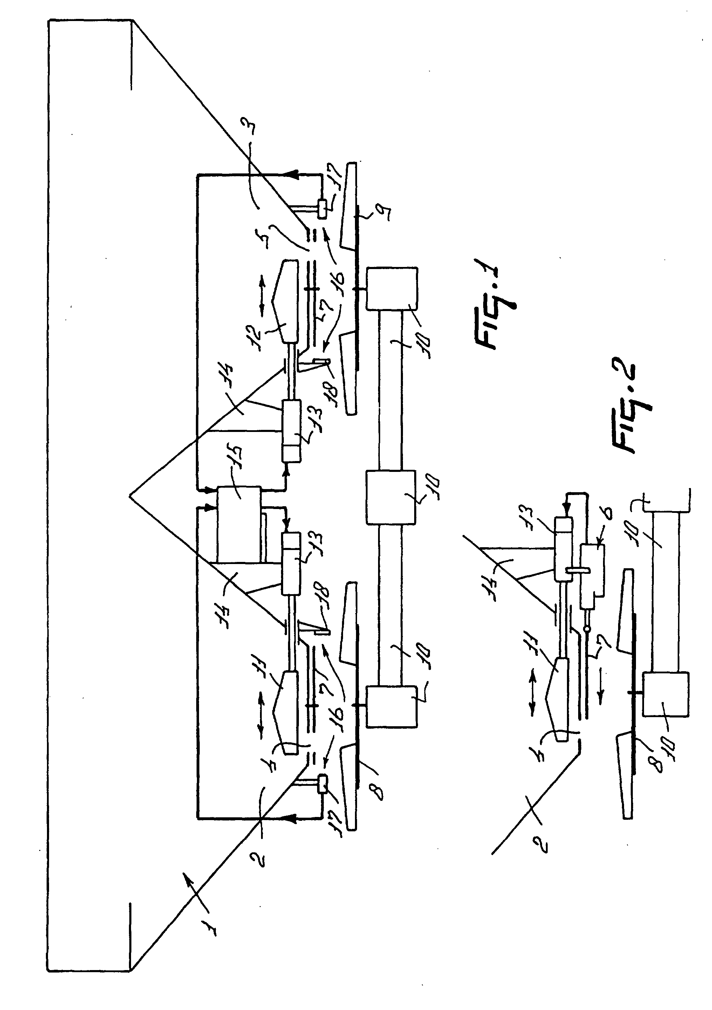

The implement shown in Figure 1 for spreading granular and/or pulverulent material, in particular for spreading fertilizer, comprises a hopper 1 including two discharge spouts 2 and 3, each provided at their lower side with one or more discharge openings 4, 5 respectively. These discharge openings are capable of being closed completely or partially to a greater or lesser extent by means of a dosing member 6. This dosing member is only shown schematically, i.e. in Figure 1, while a closing member 7, constituting part of said dosing member 6, is also shown schematically in Figure 1. Below the discharge openings 4 and 5 there is disposed a spreading member 8, 9 respectively. These spreading members are driven from the power take-off shaft of a preceding tractor or similar vehicle. The power take-off shaft is connected via an intermediary shaft with a transmission system 10 for the spreading members. The material passed via the discharge openings 4, 5 respectively falls onto the spreading members 8 and 9 and is flung away by these rotating members, while a fan-shaped spread pattern of the granular and/or pulverulent material is obtained, which spread pattern is inherent in a centrifugal spreader.

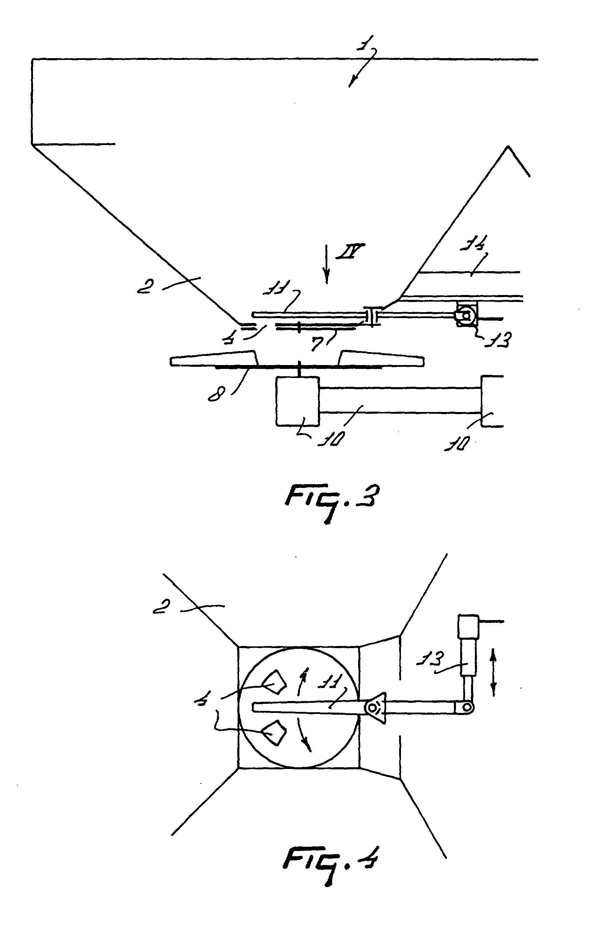

During flowing out of the material to be spread through the discharge openings 4, 5 respectively, irregularities and cloggings appear to take place rather frequently in practice. For this reason it is common practice to dispose, in the lower part of the hopper, a stirring member or an otherwise movable member, usually designated as an agitator. In the presently described embodiment, in the lower part of the two discharge spouts 2 and 3 there is disposed an agitator 11, 12 respectively. This agitator constitutes the means by which the conveyance of the material to be spread through the discharge opening(s) adjusted by the dosing member(s) 6. By moving these means in the lower part of the discharge spouts 2 and 3, irregularities and/or cloggings in the lower part of the hopper are prevented from taking place. When the material to be spread is constituted by granular material, such as fertilizer grains, then it is important that these grains are not smashed or pulverized by the agitator means. Therefore, it is favourable when the kind of movement and/or the speed of movement of the agitator means are/is attuned to the extent to which the discharge openings 4, 5 respectively are closed by a dosing member 6. When one opening or both openings are completely closed by the dosing members, these agitator means have to be adjusted into the position of rest. This adaptation of the movement of the agitator means to the discharge openings being closed or not and, when these discharge openings are opened, to the size thereof, is realized by designing the agitator means as electronically controlled ones. For this purpose there can be used an electronically controlled motor or an operating cylinder or an actuator. In Figures 1 up to and including 4, the agitator means are moved by an actuator 13. The housing of this actuator is fitted to the hopper 1 by means of a support 14. In the embodiment of Figures 1 and 2, there is caused a reciprocating movement of the agitator means 11 by means of the actuator 13. In said embodiments, the drive of these agitator means 11 is effected through the lateral side of the discharge spouts. Of course, there has to be provided a fitting closing member for the opening in the discharge spouts around the driving rod for the agitator means. Both the switching on and off of the actuator 13 and the speed of movement thereof are electronically controlled from a microprocessor 15. As shown in Figure 1, this microprocessor can be disposed in the space between the two discharge spouts 2 and 3. Of course it is also possible to have this microprocessor integrated into a computer which is disposed in the tractor or that the microprocessor is entirely constituted by the computer disposed in the tractor. Therefore, the actuator 13 can be controlled from the tractor or a similar preceding vehicle. The information required by the microprocessor 15 for controlling the actuator 13 can be supplied by a sensor member 16. In Figure 1, said sensor member 16 is constituted by an optical element 17 which cooperates with a reflecting element 18. Such a sensor member 16 is fitted to the lower side of each of the discharge spouts 2 and 3, the arrangement being such that by means of these sensor members there can be detected whether material is flowing out of the discharge openings 4, 5 respectively and possibly even what is the outflow density and whether this outflow density fluctuates. The information required by the microprocessor 15 for controlling the actuator 13 can also be supplied by the dosing member 6. It is even possible to design the dosing member 6, which may be provided itself with a microprocessor, such that said dosing member is capable of controlling the actuator 13 directly, as shown in Figure 2, because in the dosing member 6 it is determined, of course, whether the opening 4, 5 respectively has to be closed completely or has to be opened to some extent, attuned to the desired amount of material to flow out.

When a single disc spreader is used, it will occur in particular on the headland that the discharge opening has to be closed completely. Then, the agitator means have to be stopped at the same time. A quick control of the actuator is very important in this situation. In case of "edge spreading" by means of a double disc spreader, it may be desirable to close the discharge opening or discharge openings of one of the discharge spouts completely, so that spreading only takes place via the spreading member located below the other discharge spout, thus achieving that the material is spread only over half of the spreading width. Also in case of "edge spreading", the agitator means in one of the discharge spouts have to be stopped as soon as the discharge openings in the relevant discharge spout are closed. Therefore, when such a double disc spreader is used, the agitator means in the separate discharge spouts have to be active independenly of each other. Consequently, an actuator control has to be provided for both agitator means individually.

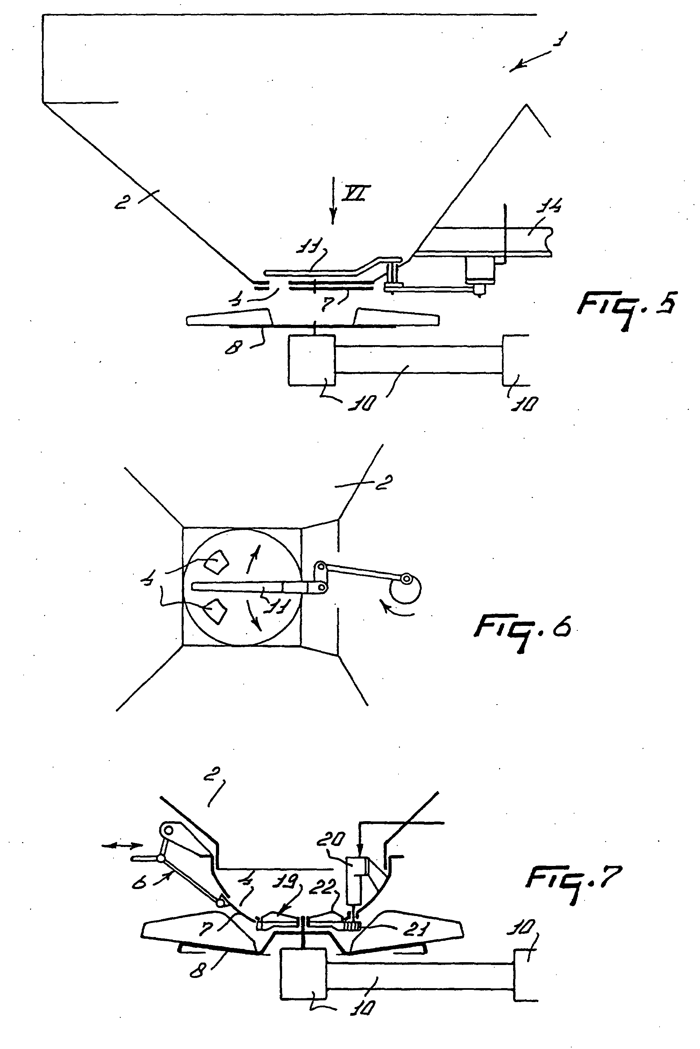

In the embodiment shown in Figure 7, the discharge spout 2 has a convex lower end, while the discharge opening or discharge openings 4 are provided in the lower part of this convex lower end in the lateral side thereof, and the dosing member 6 has a convex dosing disc or closing member 7 located below this convex lower end. The means influencing the conveyance of the material to be spread at an adjusted discharge opening or at adjusted discharge openings are constituted in this situation by a movable bottom 19. This bottom is rotatable about a shaft located in line with the rotation shaft of the spreading member 8. However, the rotating movement of this bottom is independent of this spreading member and includes for this purpose an own electronically controlled drive which, in the presently described embodiment, is constituted by an electronically controlled motor 20 which is present in the hopper 1 and a transmission element 21 to transfer the movement of the motor shaft to the bottom 19. Of course, the motor 20 can also be disposed below the hopper 1. The bottom 19 can be provided with upright edge pieces 22. Like in the embodiments described in the foregoing, the bottom can be stopped as soon as the dosing disc of the dosing member 6 has closed the discharge opening(s), or the control can be such that the speed of rotation of the bottom 19 is adapted to the size of the adjusted discharge opening(s).

The agitator means 11 and 12 can be designed and driven in various manners. In Figures 1 and 2, the actuator 13 causes the agitator to make a reciprocating movement in the lower part of the relevant discharge spouts. In Figures 3 and 4, the actuator 13 causes a swinging movement above the two discharge openings in the lower part of a relevant discharge spout. Figures 5 and 6 show swinging agitator means, identical to those in Figures 3 and 4, but motordriven via a bar mechanism. It will be obvious, that other types of agitator means can be used as well, e.g. agitator means rotating about a vertical shaft and capable of being driven by a motor disposed in the lower part of the hopper. In a (non-shown) embodiment, a discharge spout can be conical and be provided with discharge openings in the lateral side of its lower part. The agitator means can then be created by designing the bottom plate of the discharge spout as a rotatable one. When the bottom plate stops, the latter has to assume such a position that the discharge openings in the discharge spout are closed. This is possible when the bottom plate is provided with an upright or a folded edge closing the discharge openings in the position of rest. Another possibility is to design the agitator means as a pivotable bottom plate capable of closing the discharge openings in the bottom of a discharge spout or to provide these agitator means with a bottom plate portion by means of which the discharge openings can be closed on the one hand, while, on the other hand, when said bottom plate portion has been adjusted into a position in which the discharge openings in the bottom of the relevant discharge spout are not closed, a portion that is connected with said bottom plate portion can be moved relative thereto. Besides applying various agitator means, it is also possible to use different sources of information for the choice of the drive means for controlling the agitator. As already mentioned in the foregoing, it is possible to dispose an optical sensor below a discharge spout, as shown in Figure 1, or to control the drive means directly from the dosing member. Another possibility is to make use of a weighing trestle. Such a weighing trestle is used for carrying the spreader in the lifting hitch at the rear of a tractor, while by means of pressure cells the decrease of weight during spreading can be established and together therewith irregularities or cloggings during spreading of the material.

The invention is not restricted to the embodiments shown in the drawings, but it includes all sorts of modifications, of course, falling within the scope of the following claims.

## Claims

1. An implement for spreading granular and/or pulverulent material, in particular for spreading fertilizer, which implement comprises a hopper (1) provided with at least one discharge opening (4, 5), and at least one spreading member (8, 9), the discharge (4, 5) opening being adapted to be closed completely or partially to a greater or lesser extent by means of a dosing member (6), and additional stirring means being provided to influence the conveyance of the material to be discharged through the discharge opening (4, 5), **characterized in that** these means are capable of being controlled electronically.

2. An implement as claimed in claim 1, **characterized in that** the means are capable of being controlled from the cabin of a preceding vehicle.

3. An implement as claimed in claim 1 or 2, **characterized in that** the means are capable of being controlled automatically, depending on the discharge opening (4, 5) being closed or not and/or the size of the discharge opening (4, 5) and/or the kind of fertilizer.

4. An implement as claimed in any one of the preceding claims, **characterized in that** there is provided a sensor member (16) to establish whether or not material is flowing through the discharge opening (4, 5).

5. An implement as claimed in claim 4, **characterized in that** the sensor member (16) is constituted by the dosing member (6), while the dosing member (6), after having closed the discharge opening (4, 5), will put the said means out of operation.

6. An implement for spreading granular and/or pulverulent material, in particular for spreading fertilizer, which implement comprises a hopper (1) provided with at least one discharge opening (4, 5), and at least one spreading member (8, 9), the discharge opening (4, 5) being adapted to be closed completely or partially to a greater or lesser extent by means of a dosing member (6), and additional means being provided to influence the conveyance of the material to be spread through the discharge opening (4, 5) adjusted by the dosing member (6), **characterized in that** the movement of the means is determined automatically, depending on the discharge opening (4, 5) being closed or not and/or the size of the discharge opening.

7. An implement as claimed in claim 1 or 6, **characterized in that** the means are capable of being controlled automatically, depending on the amount of material flowing through the discharge opening (4, 5) per unit of time.

8. An implement as claimed in claim 7, **characterized in that** there is provided a sensor member (16) for determining the amount of material flowing through the discharge opening (4, 5) per unit of time.

9. An implement as claimed in claim 8, **characterized in that** the sensor member (16) is constituted by a weighing trestle by means of which the implement can be coupled to a preceding vehicle.

10. An implement as claimed in any one of the preceding claims, **characterized in that** the hopper (1) is provided with at least two discharge spouts (2, 3), each spout including at least one discharge opening (4, 5) and in each spout means being provided for influencing the conveyance of the material to be spread through a respective discharge opening (4, 5), which means are capable of being controlled electronically, independently of each other, in the various discharge spouts (2, 3).

11. An implement as claimed in any one of the preceding claims, **characterized in that** the means are driven with the aid of an electronically controlled motor.

12. An implement as claimed in any one of the preceding claims, **characterized in that** the means are driven by means of an electronically controlled driving member passed through the lateral side of the hopper (1).

13. An implement as claimed in claim 12, **characterized in that** the driving member comprises an electromechanical control cylinder or actuator (13) disposed outside the hopper (1).

14. An implement as claimed in any one of the preceding claims, **characterized in that** the means are capable of performing a reciprocating movement above the discharge opening (4, 5).

15. An implement as claimed in any one of the preceding claims, **characterized in that** the means are capable of performing a reciprocating swinging movement above the discharge opening (4, 5).

16. An implement as claimed in claim 14 or 15, **characterized in that** the stroke of the reciprocating movement or that of the swinging movement is electronically adjustable.

17. An implement as claimed in any one of the preceding claims, **characterized in that** the means are capable of performing a rotating movement above the discharge opening (4, 5).

18. An implement as claimed in any one of the preceding claims, **characterized in that** the means are constituted by a bottom or bottom portion (19) which is movable, in particular rotatable, or that the means comprise a bottom portion (19) which is movable, in particular rotatable.

19. An implement as claimed in claim 18, **characterized in that** the discharge opening(s) (4, 5) is/are provided in the lower wall of the hopper (1) in the lateral side thereof and the said means are constituted by the bottom (19) of this hopper (1).

20. An implement as claimed in claim 18, **characterized in that**, when the means are in the position of rest, the discharge openings (4, 5) are closed.

21. An implement as claimed in any one of the preceding claims, **characterized in that** the hopper (1) is provided with conical discharge spouts (2) and the discharge openings (4, 5) are provided in the lower part of the discharge spouts (2), in the lateral side thereof, the said means being constituted by a rotatable bottom (19) for the relevant discharge spouts (2), which rotatable bottom (19) is provided with an upright or a folded edge.

22. An implement as claimed in any one of the preceding claims, **characterized in that** the speed of movement and/or the shape of the means are/is electronically adjustable.

## Patentansprüche

1. Gerät zum Streuen von körnigem und/oder pulverigem Gut, insbesondere zum Streuen von Kunstdünger, wobei die Vorrichtung einen Vorratsbehälter (1) umfaßt, der mit mindestens einer Auslaßöffnung (4, 5) und mindestens einem Streuglied (8, 9) versehen ist, wobei die Auslaßöffnung (4, 5) dazu ausgebildet ist, mittels eines Dosierers (6) ganz oder teilweise in größerem oder geringerem Maße geschlossen zu werden, und wobei zusätzliche Rührvorrichtungen vorhanden sind, um die Beförderung des durch die Auslaßöffnung (4, 5) auszubringenden Gutes zu beeinflussen,
**dadurch gekennzeichnet, daß** diese Vorrichtungen elektronisch gesteuert werden können.

2. Gerät nach Anspruch 1,
**dadurch gekennzeichnet, daß** die Vorrichtungen von der Kabine eines vorgeordneten Fahrzeuges aus gesteuert werden können.

3. Gerät nach Anspruch 1 oder 2,
**dadurch gekennzeichnet, daß** die Vorrichtungen in Abhängigkeit davon, ob die Auslaßöffnung (4, 5) geschlossen ist oder nicht, und/oder in Abhängigkeit von der Größe der Auslaßöffnung (4, 5) und/oder der Art des Kunstdüngers automatisch gesteuert werden können.

4. Gerät nach einem der vorhergehenden Ansprüche,
**dadurch gekennzeichnet, daß** ein Sensorelement (16) vorgesehen ist, um festzustellen, ob Gut durch die Auslaßöffnung (4, 5) strömt oder nicht.

5. Gerät nach Anspruch 4,
**dadurch gekennzeichnet, daß** das Sensorelement (16) durch den Dosierer (6) gebildet ist, wobei der Dosierer (6) die Vorrichtungen außer Betrieb setzt, nachdem er die Auslaßöffnung (4, 5) geschlossen hat.

6. Gerät zum Streuen von körnigem und/oder pulverigem Gut, insbesondere zum Streuen von Kunstdünger, wobei das Gerät einen Vorratsbehälter (1) umfaßt, der mit mindestens einer Auslaßöffnung (4, 5) und mindestens einem Streuglied (8, 9) versehen ist, wobei die Auslaßöffnung (4, 5) dazu ausgebildet ist, mittels eines Dosierers (6) ganz oder teilweise in größerem oder geringerem Maße geschlossen zu werden, und wobei zusätzliche Vorrichtungen vorhanden sind, um die Beförderung des Gutes zu beeinflussen, das durch die von dem Dosierer (6) eingestellte Auslaßöffnung (4, 5) auszustreuen ist,
**dadurch gekennzeichnet, daß** die Bewegung der Vorrichtungen in Abhängigkeit davon, ob die Auslaßöffnung (4, 5) geschlossen ist oder nicht, und/oder in Abhängigkeit von der Größe der Auslaßöffnung automatisch gesteuert wird.

7. Gerät nach Anspruch 1 oder 6,
**dadurch gekennzeichnet, daß** die Vorrichtungen in Abhängigkeit von der Gutmenge, die pro Zeiteinheit durch die Auslaßöffnung (4, 5) strömt, automatisch gesteuert werden können.

8. Gerät nach Anspruch 7,
**dadurch gekennzeichnet, daß** ein Sensorelement (16) vorgesehen ist, um die Gutmenge zu ermitteln, die pro Zeiteinheit durch die Auslaßöffnung (4, 5) strömt.

9. Gerät nach Anspruch 8,
**dadurch gekennzeichnet, daß** das Sensorelement (16) durch einen Wäge-Anbaubock gebildet ist, mittels dessen das Gerät an ein vorgeordnetes Fahrzeug anschließbar ist.

10. Gerät nach einem der vorhergehenden Ansprüche,
**dadurch gekennzeichnet, daß** der Vorratsbehälter (1) mit mindestens zwei Auslaßtrichtern (2, 3) versehen ist, wobei jeder Trichter mindestens eine Auslaßöffnung (4, 5) enthält und in jedem Trichter Vorrichtungen vorhanden sind, um die Beförderung des Gutes, das durch eine entsprechende Auslaßöffnung (4, 5) auszustreuen ist, zu beeinflussen, wobei die Vorrichtungen in den verschiedenen Auslaßtrichtern (2, 3) unabhängig voneinander elektronisch gesteuert werden können.

11. Gerät nach einem der vorhergehenden Ansprüche,
**dadurch gekennzeichnet, daß** die Vorrichtungen mit Hilfe eines elektronisch gesteuerten Motors angetrieben werden.

12. Gerät nach einem der vorhergehenden Ansprüche,
**dadurch gekennzeichnet, daß** die Vorrichtungen mittels eines elektronisch gesteuerten Antriebsgliedes angetrieben werden, das durch den seitlichen Bereich des Vorratsbehälters (1) hindurchgeführt ist.

13. Gerät nach Anspruch 12,
**dadurch gekennzeichnet, daß** das Antriebsglied einen elektromechanischen Steuerzylinder oder ein Stellglied (13) umfaßt, der bzw. das außerhalb des Vorratsbehälters (1) angeordnet ist.

14. Gerät nach einem der vorhergehenden Ansprüche,
**dadurch gekennzeichnet, daß** die Vorrichtungen in der Lage sind, eine hin- und hergehende Bewegung über der Auslaßöffnung (4, 5) auszuführen.

15. Gerät nach einem der vorhergehenden Ansprüche,
**dadurch gekennzeichnet, daß** die Vorrichtungen in der Lage sind, eine hin- und hergehende Schwenkbewegung über der Auslaßöffnung (4, 5) auszuführen.

16. Gerät nach Anspruch 14 oder 15,
**dadurch gekennzeichnet, daß** der Hub der hin- und hergehenden Bewegung oder der der Schwenkbewegung elektronisch einstellbar ist.

17. Gerät nach einem der vorhergehenden Ansprüche,
**dadurch gekennzeichnet, daß** die Vorrichtungen in der Lage sind, eine rotierende Bewegung über der Auslaßöffnung (4, 5) auszuführen.

18. Gerät nach einem der vorhergehenden Ansprüche,
**dadurch gekennzeichnet, daß** die Vorrichtungen durch einen Boden oder Bodenteil (19) gebildet sind, der bewegbar, insbesondere drehbar ist, oder daß die Vorrichtungen einen Bodenteil (19) umfassen, der bewegbar, insbesondere drehbar ist.

19. Gerät nach Anspruch 18,
**dadurch gekennzeichnet, daß** die Auslaßöffnung(en) (4, 5) in der unteren Wandung des Vorratsbehälters (1) in dessen seitlichem Bereich angeordnet ist/sind, und daß die Vorrichtungen durch den Boden (19) dieses Vorratsbehälters (1) gebildet sind.

20. Gerät nach Anspruch 18,
**dadurch gekennzeichnet, daß** die Auslaßöffnungen (4, 5) geschlossen sind, wenn sich die Vorrichtungen in der Ruhelage befinden.

21. Gerät nach einem der vorhergehenden Ansprüche,
**dadurch gekennzeichnet, daß** der Vorratsbehälter (1) mit konischen Auslaßtrichtern (2) versehen ist und die Auslaßöffnungen (4, 5) im unteren Teil der Auslaßtrichter (2) in deren seitlichem Bereich angeordnet sind, wobei die Vorrichtungen durch einen drehbaren Boden (19) für die jeweiligen Auslaßtrichter (2) gebildet sind, und wobei der drehbare Boden (19) mit einem aufrechten oder einem umgebogenen Rand versehen ist.

22. Gerät nach einem der vorhergehenden Ansprüche,
**dadurch gekennzeichnet, daß** die Bewegungsgeschwindigkeit und/oder die Form der Vorrichtungen elektronisch einstellbar sind/ist.

## Revendications

1. Instrument pour épandre de la matière granulaire et/ou pulvérulente, en particulier pour épandre de l'engrais, instrument qui comporte une trémie (1), munie d'au moins une ouverture d'évacuation (4, 5), et au moins un élément d'épandage (8, 9), l'ouverture d'évacuation (4, 5) étant adaptée pour être fermée complètement ou partiellement dans une mesure plus ou moins grande par l'intermédiaire d'un élément de dosage (6), et des moyens d'agitation supplémentaires étant agencés pour influencer le transport de la matière devant être évacuée à travers l'ouverture d'évacuation (4, 5), **caractérisé en ce que** ces moyens peuvent être commandés électroniquement.

2. Instrument selon la revendication 1, **caractérisé en ce que** les moyens peuvent être commandés à partir de la cabine d'un véhicule précédent.

3. Instrument selon la revendication 1 ou 2, **caractérisé en ce que** les moyens peuvent être commandés automatiquement, selon que l'ouverture d'évacuation (4, 5) soit fermée ou pas et/ou selon la taille de l'ouverture d'évacuation (4, 5) et/ou selon le type d'engrais.

4. Instrument selon l'une quelconque des revendications précédentes, **caractérisé en ce qu'**un élément formant capteur (16) est agencé pour établir si la matière s'écoule ou pas à travers l'ouverture d'évacuation (4, 5).

5. Instrument selon la revendication 4, **caractérisé en ce que** l'élément formant capteur (16) est constitué par l'élément de dosage (6), tandis que l'élément de dosage (6), après avoir fermé l'ouverture d'évacuation (4, 5), va mettre lesdits moyens hors de fonctionnement.

6. Instrument pour épandre de la matière granulaire et/ou pulvérulente, en particulier pour épandre de l'engrais, instrument qui comporte une trémie (1), munie d'au moins une ouverture d'évacuation (4, 5), et au moins un élément d'épandage (8, 9), l'ouverture d'évacuation (4, 5) étant adaptée pour être fermée complètement ou partiellement dans une mesure plus ou moins grande par l'intermédiaire d'un élément de dosage (6), et des moyens supplémentaires étant agencés pour influencer le transport de la matière devant être épandue à travers l'ouverture d'évacuation (4, 5) ajustée par l'élément de dosage (6), **caractérisé en ce que** le déplacement des moyens est déterminé automatiquement, selon que l'ouverture d'évacuation (4, 5) soit fermée ou pas et/ou selon la taille de l'ouverture d'évacuation.

7. Instrument selon la revendication 1 ou 6, **caractérisé en ce que** les moyens peuvent être commandés automatiquement, selon la quantité de matière qui s'écoule à travers l'ouverture d'évacuation (4, 5) par unité de temps.

8. Instrument selon la revendication 7, **caractérisé en ce qu'**un élément formant capteur (16) est agencé pour déterminer la quantité de matière qui s'écoule à travers l'ouverture d'évacuation (4, 5) par unité de temps.

9. Instrument selon la revendication 8, **caractérisé en ce que** l'élément formant capteur (16) est constitué par un chevalet de pesage par l'intermédiaire duquel l'instrument peut être accouplé à un véhicule précédent.

10. Instrument selon l'une quelconque des revendications précédentes, **caractérisé en ce que** la trémie (1) est munie d'au moins deux becs d'évacuation (2, 3) chaque bec comportant au moins une ouverture d'évacuation (4, 5), et des moyens étant agencés dans chaque bec pour influencer le transport de la matière à épandre à travers une ouverture d'évacuation respective (4, 5), moyens qui peuvent être commandés électroniquement, indépendamment les uns des autres, dans les différents becs d'évacuation (2, 3).

11. Instrument selon l'une quelconque des revendications précédentes, **caractérisé en ce que** les moyens sont entraînés à l'aide d'un moteur commandé électroniquement.

12. Instrument selon l'une quelconque des revendications précédentes, **caractérisé en ce que** les moyens sont entraînés par l'intermédiaire d'un élément d'entraînement commandé électroniquement passé à travers le côté latéral de la trémie (1).

13. Instrument selon la revendication 12, **caractérisé en ce que** l'élément d'entraînement comporte un vérin de commande électromécanique ou actionneur (13) disposé à l'extérieur de la trémie (1).

14. Instrument selon l'une quelconque des revendications précédentes, **caractérisé en ce que** les moyens peuvent effectuer un déplacement en va et vient au-dessus de l'ouverture d'évacuation (4, 5).

15. Instrument selon l'une quelconque des revendications précédentes, **caractérisé en ce que** les moyens peuvent effectuer un déplacement en basculement en va et vient au-dessus de l'ouverture d'évacuation (4, 5).

16. Instrument selon la revendication 14 ou 15, **caractérisé en ce que** la course du déplacement en va et vient ou du déplacement en basculement peut être ajustée électroniquement.

17. Instrument selon l'une quelconque des revendications précédentes, **caractérisé en ce que** les moyens peuvent effectuer un déplacement en rotation au-dessus de l'ouverture d'évacuation (4, 5).

18. Instrument selon l'une quelconque des revendications précédentes, **caractérisé en ce que** les moyens sont constitués par un fond ou une partie de fond (19) qui est mobile, en particulier rotative, ou **en ce que** les moyens comportent une partie de fond (19) qui est mobile, en particulier rotative.

19. Instrument selon la revendication 18, **caractérisé en ce que** la ou les ouvertures d'évacuation (4, 5) est/sont agencées dans la paroi inférieure de la trémie (1) dans son côté latéral, et lesdits moyens sont constitués par le fond (19) de cette trémie (1).

20. Instrument selon la revendication 18, **caractérisé en ce que**, lorsque les moyens sont dans la position de repos, les ouvertures d'évacuation (4, 5) sont fermées.

21. Instrument selon l'une quelconque des revendications précédentes, **caractérisé en ce que** la trémie (1) est munie de becs d'évacuation coniques (2), et les ouvertures d'évacuation (4, 5) sont agencées dans la partie inférieure des becs d'évacuation (2), dans le côté latéral de ceux-ci, lesdits moyens étant constitués par un fond rotatif (19) pour les becs d'évacuation concernés (2), fond rotatif (19) qui est muni d'un bord dirigé vers le haut ou plié.

22. Instrument selon l'une quelconque des revendications précédentes, **caractérisé en ce que** la vitesse de déplacement et/ou la forme des moyens sont/est ajustable électroniquement.
